# EUROPÄISCHE PATENTSCHRIFT

(11) **EP 3 636 385 B1**
(45) Veröffentlichungstag und Bekanntmachung des Hinweises auf die Patenterteilung: **20.09.2023**
(21) Anmeldenummer: 19000452.3
(22) Anmeldetag: 07.10.2019
(51) Int. Cl.: B23Q 1/70, B23Q 17/00, B23Q 17/10, B23Q 17/09, G05B 19/00

(54) **ARBEITSSPINDEL MIT SENSOREN UND VERFAHREN ZUR ERFASSUNG UND ÜBERWACHUNG IHRER HISTORIE**
WORK SPINDLE WITH SENSORS AND METHOD FOR DETECTING AND MONITORING ITS HISTORY
BROCHE DE TRAVAIL POURVUE DE CAPTEURS ET PROCÉDÉ DE DÉTECTION ET DE SURVEILLANCE DE SON HISTORIQUE

(30) Priorität: 08.10.2018 DE 102018007905
(43) Veröffentlichungstag der Anmeldung: 15.04.2020
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- WO-A1-01/60562
- DE-A1- 10 345 883
- DE-A1- 10 348 608
- DE-A1-102016 005 892
- DE-B3-102008 054 251
- US-A- 5 783 887

## Beschreibung

Die Erfindung betrifft eine Arbeitsspindel mit mindestens einer in einem Spindelgehäuse gelagerten mit einem Antrieb ausgestatteten Spindelwelle, wobei die Spindelwelle eine - mittels einer im Spindelgehäuse untergebrachten Betätigungsvorrichtung - über mindestens ein Spannmittel offen- und schließbare Werkzeugspannvorrichtung aufweist. Im Spindelgehäuse ist mindestens ein Sensor und ein dazugehörendes Abtastbauteil zum Detektieren der Drehzahl der Spindelwelle angeordnet.

Ein großer Teil der z.B. in metall- und holzverarbeitenden Industrie eingesetzten Bearbeitungs- und/oder Werkzeugmaschinen verfügen über in geschlossenen Gehäusen untergebrachte als Komplettaustauschteil aufgebaute Arbeitsspindeln, deren Spindelwellen direkt mit einem Elektromotor und einer Werkzeugaufnahme ausgestattet sind. Derartige Arbeitsspindeln sind dauerbelastete, austauchbare Verschleißaggregate, deren belastungsabhängige Lebensdauer für eine rechtzeitige Wartung oder einen vorzeitigen Aggregateaustausch zeitlich noch vor dem voraussichtlichen Aggregateausfall abschätzbar sein sollte.

Die DE 199 44 171 A1 beschreibt ein Verfahren zum Betrieb einer Schraubvorrichtung zur Herstellung einer definierten Schraubverbindung, über die mindestens zwei Bauteile mit einer vorbestimmten Klemmkraft aneinander gepresst werden. Dabei wird aus der akustischen Emission des Schraubvorgangs ein elektrisches Signal ermittelt. Aus dem Signal wird ein Merkmal gefiltert, dessen Verlauf am besten mit der Klemmkraft der Schraubverbindung korreliert. Das ermittelte Merkmal dient zur Aufstellung einer Klemmkraftkennlinie. Mithilfe der Kennlinie wird der Schraubvorgang u.a. gesteuert, überwacht und eine Prozessbewertung erarbeitet.

Aus der DE 10 2016 005 892 A1 ist eine Anomalieerfassungsvorrichtung mit Funktionen zur Erfassung einer Anomalie einer Werkzeugmaschine und ein Anomalieerfassungsverfahren bekannt. Die Anomalie ist hier eine Fehlfunktion, die sich aufgrund des Verschleißes oder einer Beschädigung der Spindel- oder Motorlager ergibt. Um eine Fehlfunktion zu detektieren, wird primär die jeweilige Ist-Spindelstoppzeit mit einer vorgegebenen Soll-Spindelstoppzeit verglichen.

Die US 5 783 887 A beschreibt eine magnetgelagerte Spindelvorrichtung für Werkzeugmaschinen. Im Gehäuse der Spindelvorrichtung ist zum einen ein die. Maschinenspindel direkt antreibender Elektromotor eingebaut. Zum anderen ist die Maschinenspindel axial und radial zwischen Magnetlagern berührungslos im Gehäuse gelagert. In der Maschinenspindel ist eine Werkzeugspannvorrichtung integriert. Sensoren erkennen den Zustand der Werkzeugs-Spannvorrichtung. Sie unterscheiden eine offene Spannzange, eine geschlossene Spannzange und eine geschlossene Spannzange ohne Werkzeug.

Der vorliegenden Erfindung liegt die Problemstellung zugrunde, eine Arbeitsspindel mit Sensoren und einer Soft- und Hardware auszustatten, um so ihren Werdegang bezüglich ihrer Aus- und Belastungen nach der ersten Inbetriebsetzung lückenlos dokumetierbar zu machen.

Diese Problemstellung wird mit den Merkmalen des Patentanspruchs 1 gelöst. Dabei ist nach Patentanspruch 1 im Spindelgehäuse mindestens ein Sensor zur Erfassung der Hubänderung eines Spannmittels angeordnet. Im oder am Spindelgehäuse ist mindestens ein Sensor zur Erkennung mindestens einer Endlage eines den Betätigungshub der Betätigungsvorrichtung realisierenden Bauteils angeordnet. Im oder am Spindelgehäuse ist mindestens ein weiterer Sensor angeordnet, der physikalische, elektrische und/oder chemische Kenngrößen erfasst. Im oder am Spindelgehäuse befindet sich eine Spindelüberwachungseinheit, die mindestens ein elektronisches Rechen- und Speichermodul mit Timer - zur Auswertung und dauerhaften Speicherung von Signalen der verbauten Sensoren sowie zur Bereitstellung einer Arbeitsspindelhistorie - aufweist. Die Spindelüberwachungseinheit umfasst mindestens eine elektronische Baugruppe, die Sensorsignale zur Kommunikation mit einem externen Speichermedium und/oder einer externen Steuerung über mindestens eine Datenschnittstelle drahtlos oder drahtgestützt übermittelt.

Gemäß dem Patentanspruch 5 wird ein Verfahren zur Erfassung und Überwachung der Arbeitsspindelhistorie bereitgestellt, wonach im oder am Gehäuse der Arbeitsspindel mehrere Sensoren und mindestens ein Rechen- und Speichermodul mit Timer angeordnet sind. Zumindest in dem Speichermodul werden während und für die Lebensdauer der Arbeitsspindel folgende Daten verliersicher registriert: Die Identifikationsdaten der Arbeitsspindel, die Revisionsstände der Soft- und Hardware, die Parameterdaten der verbauten Sensoren, die reinen Prozessdaten und/oder die herausgefilterten Maximal- und Minimalwerte sowie die Diagnosedaten aller Sensoren.

Mit der Erfindung wird eine Arbeitsspindel zur Verfügung gestellt, die neben mehreren Aktoren auch mehrere Sensoren umfasst. Mithilfe der Sensoren werden wesentliche Funktionen der Arbeitsspindel permanent oder zumindest in kurzen Zeitabständen zeitgleich oder nach und nach über den momentanen Ist-Zustand abgefragt. Die abgefragten Daten oder Werte werden in einer Spindelüberwachungseinheit zumindest großteils dauerhaft und verliersicher abgelegt. Zudem werden die Sensorwerte zum einen zum Erstellen von Diagnosedaten und Verschleißprognosen umgerechnet und zum anderen zur Darstellung und Abspeicherung systematisch aufbereitet.

In der Spindelüberwachungseinheit werden Identifikationsdaten, Parameterdaten, Prozessdaten und Diagnosedaten gesammelt. Die Identifikationsdaten geben u.a. den Spindeltyp, die Spindelseriennummer, den Hersteller, ggf. den Kunden und die für die Spindel erforderlichen Betriebsmittel wieder. Die Parameterdaten des oder der Aktoren und der in der Arbeitsspindel angeordneten Sensoren geben an, welche physikalischen, elektrischen und/oder chemischen Kenngrößen die Sensoren messen. Die Aktoren sind im Ausführungsbeispiel der die Spindelwelle antreibende Elektromotor, die pneumatische Betätigungseinrichtung für das Spannen der spindelseitigen Spannzange und der z.B. elektrische Antrieb für die Spindelkühlung. Die Prozessdaten beschreiben den zeitlichen Verlauf der Sensorkenngrößen. Die Diagnosedaten beinhalten die Information, ob die überwachten Einheiten, Aktoren und Sensoren funktionstüchtig sind oder bis wann sie funktionstüchtig waren. Dabei umfasst die Arbeitsspindelhistorie auch die unmittelbare Gegenwart.

Die in der Spindelüberwachungseinheit abgespeicherten Daten sind im Wesentlichen nur autorisiertem Servicepersonal oder dem Hersteller zugänglich. Um sie vor einem nicht autorisierten Zugriff zu bewahren, ist die Befestigung der Spindelüberwachungseinheit an der Arbeitsspindel verplombt oder versiegelt. Die drahtlose oder drahtgebundene Datenübertragung der vorhandenen Schnittstellen ist passwortgeschützt.

Weitere Einzelheiten der Erfindung ergeben sich aus den Unteransprüchen und der nachfolgenden Beschreibung mehrerer schematisch dargestellter Ausführungsformen.
- Figur 1:: perspektivische Ansicht einer Arbeitsspindel;
- Figur 2:: Längsschnitt zu Figur 1, mit Spannzange;
- Figur 3:: wie Figur 2, jedoch zusätzlich mit geschnittenem Ausschnitt eines Werkzeughalters.

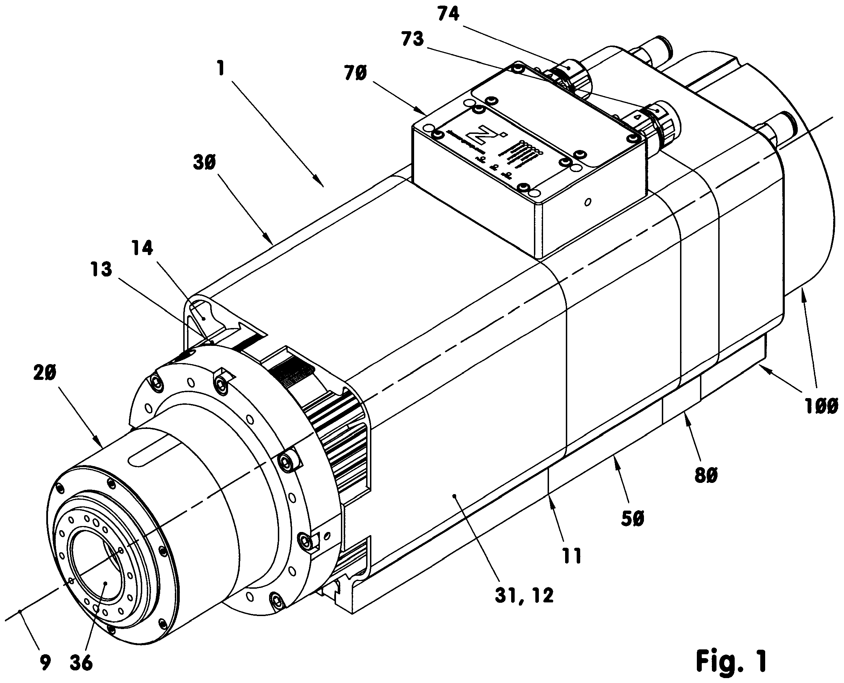

Die Figuren 1, 2 und 3 zeigen eine an eine Werkzeugmaschine adaptier- und austauschbare luftgekühlte Arbeitsspindel (1), die aus sechs Baugruppen besteht, einer Frontflanschbaugruppe (20), einer Motorbaugruppe (30), einer Zwischenflanschbaugruppe (50), einer Zylinderbaugruppe (80) und einer Lüfterbaugruppe (100). Alle Baugruppen sind hintereinander angeordnet und haben eine gemeinsame Mittellinie (9). An der Zwischenflanschbaugruppe (50) ist eine Spindelüberwachungseinheit (70) befestigt.

Die Motorbaugruppe (30), die Zwischenflanschbaugruppe (50) und die Zylinderbaugruppe (80) haben jeweils ein aus einer Aluminiumlegierung im Stranggussverfahren gefertigtes Hohlprofilgehäuse (31, 51, 81), das jeweils Teil des Spindelgehäuses (11) ist. Alle Hohlprofilgehäuse haben zumindest annähernd den gleichen Querschnitt. Sie haben eine vierkantförmige Außenwandung (12) und eine zentrale rohrförmige Innenwandung (13), die zudem radial abstehende Kühlrippen aufweist. Die Außen-und die Innenwandung sind über Gehäusestege (14) miteinander verbunden.

Die einen Elektromotor (32) aufnehmende Motorbaugruppe (30) besteht aus einer Statorwicklung (33), die an der Innenwandung des Hohlprofilgehäuses (81) befestigt ist. In dem von der Statorwicklung (33) umgebenen Raum befindet sich die Rotorwicklung (34), die auf einer hohlen Spindelwelle (35) fixiert ist.

Die vor der Motorbaugruppe (30) angeordnete Frontflanschbaugruppe (20) lagert in einem Hauptflansch (21) die Spindelwelle (35) in zwei in O-Anordnung angeordneten Schulterlagern (22, 27). Im vorderen Bereich des Hauptflansches (21) sitzt das Festlager (22) am Außenring durch einen Labyrinthflansch (23) axial gesichert. Das der Motorbaugruppe (30) nächstgelegene Schulterlager (27) liegt mit seinem Innenring an einem Wellenbund an, der im Bereich der Motorbaugruppe endet. Sein Außenring wird über eine Schiebehülse (28) mittels einer Vielzahl von Schraubendruckfedern - axial vorgespannt - belastet. In der Außenwandung des Hauptflansches (21) sind - jeweils in einer radialen Bohrung - z.B. zwei Sensoren anordenbar. Ein vorn liegender Sensor ist ein Temperatursensor (126). Am Übergang zur Motorbaugruppe (30) ist gestrichelt eine Ausnehmung (25) als günstiger Ort für den Einbau eines Schwingungssensors dargestellt.

Der Temperatursensor (126), der vorn im Hauptflansch (21) in einer Temperatursensorausnehmung (24) angeordnet ist, ist im vorliegenden Fall z.B. ein Kaltleiter für einen Temperaturbereich von z.B. -50 bis 500°C, bei dem der Sensorwiderstand der gemessenen Temperatur nahezu proportional folgt. Er ist ein Platin-Temperatursensor in Dünnschichttechnik mit einem Widerstand von 500 Ω bei 0°C.

Das im Hohlprofilgehäuse (81) der Zwischenflanschbaugruppe (50) gelegene Ende der Spindelwelle (35) ist dort ebenfalls in einem Schulterlager (53) gelagert. Dabei liegt der Innenring des Schulterlagers (53) an einem auch als Abtastbauteil dienenden Nockenflansch (54) an, der axial auf dem Ende der Spindelwelle (35) aufgeschraubt ist. Der Außenring des Schulterlagers (53) sitzt in einer Gleithülse (55), die über einen Zwischenflansch (52) am Hohlprofilgehäuse (81) zentriert verschraubt ist. Die Gleithülse (55) belastet über einen Hülsenbund den Außenring des Schulterlagers (53) - zum rückseitigen Spindelende hin - mithilfe einer Vielzahl von Schraubendruckfedern.

Am Zwischenflansch (52) stützt sich eine ringförmige, z.B. ebene Sensorenträgerplatte (57) über z.B. vier zylindrische Abstandshalter (59) ab. Auf der Sensorenträgerplatte (57) sind mindestens zwei Sensoren befestigt, ein Drehzahlsensor (123) und ein z.B. analog arbeitender Wegmesssensor (121). Letzterer ist über einen Analogsensorträger (58) auf der Sensorenträgerplatte (57) angeordnet.

Der Drehzahlsensor (123) ist im Ausführungsbeispiel ein als Schalter funktionierender induktiver Näherungsschalter, an dessen Stirnseite der eisenmetallische Nockenflansch (54) mit seinen am Umfang verteilten z.B. vier Nocken vorbeidreht. Aus der Anzahl der pro Zeiteinheit am Drehzahlsensor (123) vorbeipassierten Nocken wird die Spindelwellendrehzahl errechnet.

Im Gegensatz dazu ist der Wegmesssensor (121) z.B. ein induktiver Wegaufnehmer für einen Erfassungsbereich von 1-4 mm. Er misst den Abstand zwischen seiner freien Frontseite und dem eisenmetallischen, konischen Schaltabschnitt (43) der Spannzange (40). Als wegproportionales Analogsignal generiert er eine Ausgangsspannung von 0-10 V.

Seitlich am Zwischenflansch (52) sitzt ein Überwachungsgehäuse (71), in dem alle Last- und Signalleitungen zusammenlaufen, um von dort in zwei vielpolige Anschlussstecker (73, 74) zu enden. Im Boden des Überwachungsgehäuses (71) befindet sich mindestens eine Platine (72) - als Teil einer Spindelüberwachungseinheit (70) - auf der u.a. mindestens ein Rechen- und Speichermodul und ein Beschleunigungssensor (129) angeordnet sind.

Der Beschleunigungssensor (129), der hier als Schwingungssensor eingesetzt wird, weist in seinem Gehäuse ein mikroelektromechanisches System auf. Der Sensor ist ein Feder-Masse-System, bei dem z.B. eine kleine Siliziummasse an hauchdünnen Siliziumstegen so kardanisch aufgehängt ist, dass sie in allen drei Koordinatenrichtungen frei schwingen kann. Die auslenkbare Masse ist von mindestens drei ortsfesten Bezugselektroden umgeben ist. Nähert sich bei einer Beschleunigung die Masse einer Bezugselektrode, ergibt sich eine messbare Kapazitätsänderung. Eine im Sensor eingebaute Elektronik ermittelt daraus eine Beschleunigungsrichtung und eine Beschleunigungsamplitude. Damit ist der Sensor in der Lage, z.B. eine Unwuchtschwingung der Spindelwelle (35), eine Wälzlagerschwingung aufgrund eines Lagerverschleißes oder dergleichen zumindest in den Ansätzen zu erkennen.

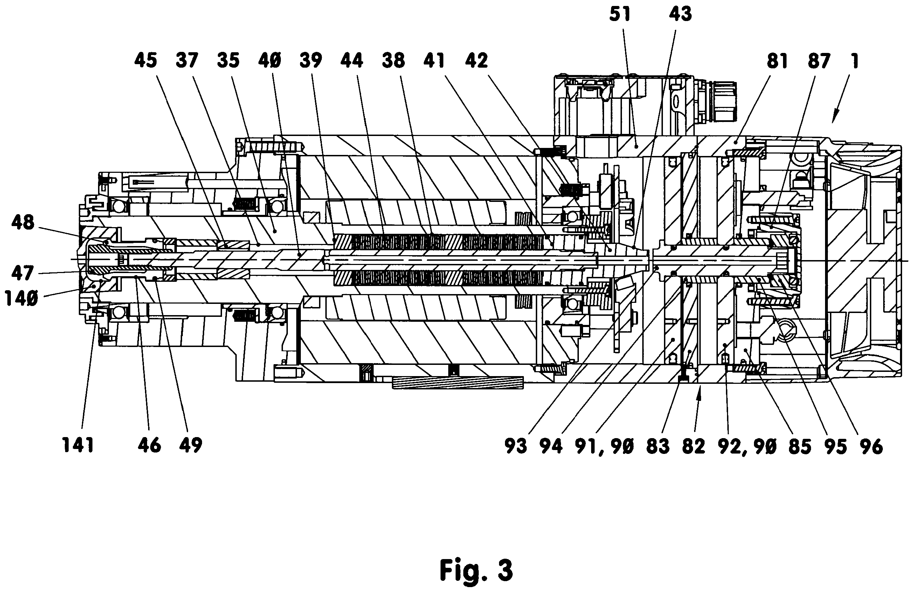

Das Hohlprofilgehäuse (81) der Zwischenflanschbaugruppe (50) wird mittels eines zentral aufgebohrten Zylinderzwischenbodens (83) gasdicht verschlossen, vgl. Figur 3. Das an das Hohlprofilgehäuse (51) eingeschraubte zylinderbaugruppenseitige Hohlprofilgehäuse (81) fixiert den Zylinderzwischenboden (83). An dem der Lüfterbaugruppe (100) zugewandten Ende des Hohlprofilgehäuses (81) ist zentriert ein Zylinderaußenboden (85) angeordnet. Zentral auf dem Zylinderaußenboden (85) sitzt gasdicht ein Stirnventilgehäuse (87). In Richtung der Spindelspitze gesehen sitzt vor dem Zylinderzwischenboden (83) ein scheibenförmiger Frontkolben (91) und vor dem Zylinderaußenboden (85) ein ebenfalls scheibenförmiger Mittelkolben (92).

Beide Kolben (91, 92) sitzen fest auf einer Kolbenstange (93), die an ihrem hinteren Ende einen axial dichtenden Ventilkolben (96) aufweist. Nach Figur 3 liegt der Ventilkolben (96) am planen Boden des Stirnventilgehäuses (87) abdichtend an. Die beiden Kolben (91, 92) sind mittels einer Distanzhülse (94) beabstandet. Zwischen dem Mittelkolben (92) und dem Ventilkolben (96) sitzt ebenfalls eine Distanzhülse (95). Die Distanzhülsen (94, 95) tragen die Kolbenstangenwandung, über die die Kolben (91, 92, 96) in den zentralen Bohrungen der Zylinderböden (83, 85) geführt sind.

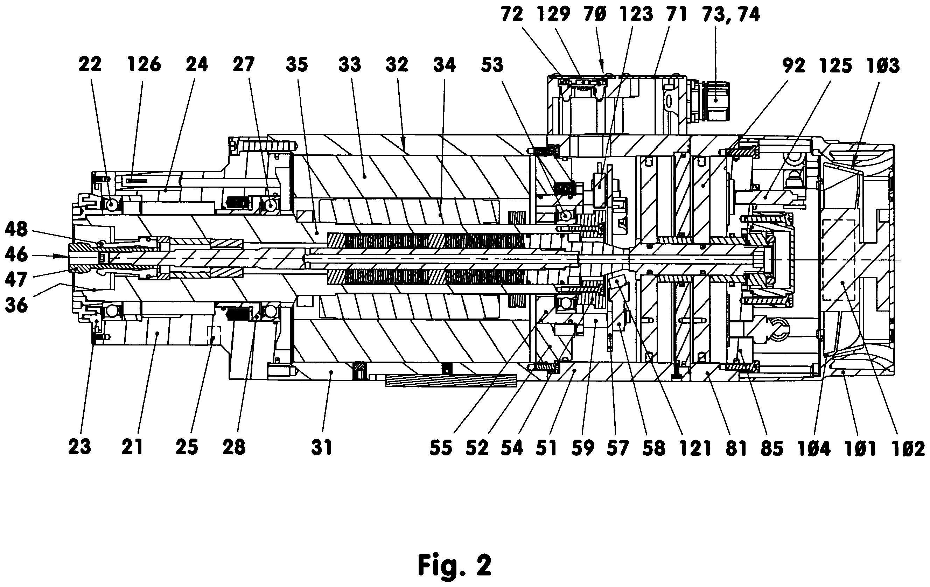

Im Zylinderaußenboden (85) sitzt in einer Bohrung ein Positionssensor (125), der in den vom Mittelkolben (92) begrenzten Druckraum mit seinem freien Ende hineinragt. Er detektiert das Annähern des Mittelkolbens (92), vgl. Figur 2. Der bis zu 100 bar druckfeste Positionssensor (125) ist ein induktiver Schließer mit einem Nennschaltabstand von z.B. 1,5 mm.

Am Zylinderaußenboden (85) zentriert sitzt zentriert das z.B. aus einem Kunststoff gefertigte Lüftergehäuse (101) der Lüfterbaugruppe (100). Im hinteren Bereich des Lüftergehäuses (101) sitzt ein Axiallüfter (103) mit einem im Lüfterrad (104) integrierten Niederspannungsmotor (102). Ggf. wird die Drehzahl des Elektromotors (102) sensorisch überwacht.

Im vorderen Ende der Spindelwelle (35) sitzt u.a. im Bereiche der z.B. kegelstumpfmantelförmigen Aufnahmeausnehmung (36) in der Regel eine ferngesteuert öffenbare Spannzange (46), vgl. auch Figur 3. Zur Betätigung der Spannzange (46) ist in der Stufenbohrung (37) der hohlen Spindelwelle (35) eine mitrotierende Spannstange (40) gelagert, die sich nahezu über die gesamte Länge der Spindelwelle (35) erstreckt. Auf ihrem hinteren Ende ist ein in der Federspeicherbohrung (38) der Stufenbohrung (37) geführter Federkolben (41) aufgeschraubt, dessen hohle Federkolbenstange (42) im Bereich der Zwischenflanschbaugruppe (50) wenige Millimeter vor dem vorderen Ende der Kolbenstange (93) des Doppelkolbens (90) mit einem konischen Schaltabschnitt (43) endet. Zwischen dem Federkolben (41) und dem Boden (39) der Federspeicherbohrung (38) ist eine Vielzahl von Tellerfedern (44) paket- und/oder stapelweise angeordnet. Zwischen dem Boden (39) und dem vorderen Ende der Spindelwelle (35) ist die Spannstange (40) in einem Stützring (45) radial gestützt gelagert. Der Stützring (45) hat mehrere radiale Schlitze, um Reinigungsdruckluft entlang der Spannstange (40) passieren zu lassen.

Auf dem vorderen Ende der Spannstange (40) sitzt in der Stufenbohrung (37) und in der Aufnahmeausnehmung (36) der Spindelwelle (35) die tellerfederbelastete Spannzange (46), deren Spanndorn (47), nach Figur 2, vorn über die Stirnfläche der Spindelwelle (35) übersteht. Der Spanndorn (47) ist am vorderen Ende der Spannstange (40) befestigt, auf der die Tellerfedern (44) aufgereiht sind. Um den Spanndorn (47) herum sind mehrere Hakenzungen (48) angeordnet. Die Hakenzungen (48) werden - bei einer für die Aufnahme einer Werkzeugaufnahme (140) und/oder eines Werkzeugs bereiten Arbeitsspindel (1) - mittels einer Ringfeder (49) gegen den zylindrischen Schaft des Spanndorns (47) gepresst, vgl. Figur 2.

Eine Werkzeugaufnahme (140) ist ein in die Aufnahmeausnehmung (36) passender, werkzeugtragender Adapter.

Um diese Teile der Spannzange (46) in diese Position zu bringen, werden in der Zylinderbaugruppe (80) die beiden Kolben (91, 92) und deren Kolbenstange (93) mittels Druckluft nach vorn geschoben. Die Spannstange (40) wird in der Folge von der Kolbenstange (93) unter einem Spannen der Tellerfedern (44) in die Stufenbohrung (37) hineingeschoben und dort gehalten.

Zugleich wandert zusammen mit der Kolbenstange (93) der Ventilkolben (96) nach vorn, sodass über das Stirnventilgehäuse (87), nach einem Zuschalten der Reinigungsdruckluft, diese über die Bohrungen der Kolben- und der Spannstange (93, 40) sowie über die Stufenbohrung (37) in den Spannzangenbereich gelangt, um die Spannzange (46) und die Aufnahmeausnehmung (36) von Bearbeitungsrückständen, wie z.B. Holzstaub, zu befreien.

Nach Figur 3 ist eine Werkzeugaufnahme (140) - mit ihrer Hintergriffsausnehmung (141) voraus - in die konische Aufnahmeausnehmung (36) der Stirnseite der Spindelwelle (35) zum Festklemmen eingesetzt. Zum Einziehen der Werkzeugaufnahme (140) in die Aufnahmeausnehmung (36) wird der Doppelkolben (90) pneumatisch zurückgefahren. Die Spannstange (40) folgt unter der Wirkung der Tellerfedern (44) der Kolbenstange (93). Dabei spreizt der Spanndorn (47) die Hakenzungen (48) gegen den Hintergriff der Hintergriffsausnehmung (141). Die Werkzeugaufnahme (140) sitzt nun fest in der Spindelwelle (35). Nach dem Spannvorgang kontaktiert die Spannzange (46) die Kolbenstange (93) nicht mehr.

Das elektronische Rechen- und Speichermodul, das auch die Schnittstellen zu den verbauten Sensoren umfasst, hat unter anderem die Aufgabe, den Typ der Arbeitsspindel zu identifizieren, die Seriennummer der Spindel abzulegen, Herstellerdaten und Revisionsstand der Software und der Hardware dauerhaft abzuspeichern.

Um die betriebsbedingte Abnutzung der Arbeitsspindel (1) dokumentieren zu können, werden während der Betriebsstunden erstens die Anzahl der Werkzeugwechsel gezählt. Dabei werden die Spannvorgänge mit Hilfe des Spannmittelhubs in korrekte und fehlerhafte unterteilt. Fehlerhafte Spannvorgänge entstehen u.a. dann, wenn beispielsweise eine spindeleigene Spannzange geschlossen wird, ohne dass sie vorher mit einem Werkzeug oder einer Werkzeugaufnahme (140) bestückt wurde. In einem solchen Fall wird beispielsweise das Anlaufen der Spindelwelle (35) über die Software des Rechen- und Speichermoduls unterbunden.

Zweitens werden die Signale des Drehzahlsensors in Kombination mit dem im Rechen- und Speichermodul vorhandenen Zeitgeber aufbereitet, indem z.B. die Betriebszeit in eine Stillstandszeit, eine Normallastzeit, eine Leerlaufzeit, eine Teillaufzeit und eine Überlastzeit aufgeteilt erfasst werden. Bei der Überlastzeit werden zudem die aufgetretenen Maximaldrehzahlen separat abgespeichert. Des Weiteren werden schlagartige Drehzahlabfälle, wie sie z.B. bei einer Kollisionsfahrt oder einem Werkzeugschneidenbruch durch eine Schnittkraftüberlastung entstehen, registriert und mit Datum z.B. in einem Fehlerspeicher hinterlegt.

Drittens wird die Drehzahl und ggf. auch die Einschaltdauer des Lüfterrades (104) des separat angetriebenen Axiallüfters (103) festgehalten. Zusätzlich kann die Motortemperatur des Axiallüfters (103) erfasst werden.

Viertens wird eine Diagnoseübersicht erstellt, in der der Zustand der einzelnen Aktoren und Sensoren einzeln abgespeichert ist. Neben deren ordnungsgemäßen Zustand werden für die Aktoren oder Sensoren typische Störgrößen registriert. So kann z.B. festgehalten werden, dass die Steuerungsplatine (72) eine Übertemperatur aufweist, die Position der Spannzange (46) auf eine fehlerhafte Werkzeugaufnahme hindeutet oder der Axiallüfter (103) nicht anläuft.

Die arbeitsspindelseitige Software fragt z.B. vor jedem Arbeitsspindelstart die Diagnoseübersicht ab, um zu entscheiden, ob die Arbeitsspindel dennoch angelassen wird oder ob sie mit einer optischen, akustischen oder textnachrichtlichen oder sonstigen Alarmmeldung abgeschaltet bleibt.

Für die Ausgabe von Störmeldungen kann z.B. im Überwachungsgehäuse (71) der Spindelüberwachungseinheit (70) - zusätzlich oder anstelle von auf Störungen hinweisende Leuchtdioden - eine Ausgabeeinheit, ggf. in Form eines Displays, angeordnet sein. Um in diesem Zusammenhang eine Menüabfrage durchführen zu können, können neben dem Display am Überwachungsgehäuse auch einige Eingabetasten platziert sein.

Fünftens besteht die Möglichkeit, einzelne Sensoren, z.B. den Analogsensor (121), durch einen Anlernvorgang - ggf. passwortgeschützt - zu parametrisieren. Zu diesem Zweck werden für den Sensor bzw. seine Sensorschnittstelle systemspezifische Systemkommandos definiert. Der Anwender nutzt dann entsprechende Kommandos für ein Umkonfigurieren der Software, beispielsweise zum Definieren verschiedener Spannzangenzustände und deren Systemreaktion darauf.

Zum Beispiel bei einem Wartungsintervall werden die in der Spindelüberwachungseinheit (70) gespeicherten Arbeitsspindeldaten vom Servicetechniker des Herstellers auf einen transportablen laptopartigen Serviceadapter mit integriertem Speichermedium abgespeichert oder in eine herstellerseitige Cloud gestellt. Mithilfe des Serviceadapters kann der Servicetechniker vor Ort oder bei der Reparatur der Arbeitsspindel (1) im Werk die gespeicherten Ist-Daten zu Diagnosezwecken auslesen. Ein Vergleich mit den werkseigenen Soll-Daten beschleunigt das Auffinden des Fehlers und verkürzt somit die Reparaturzeit. Nach dem Service können bestimmte Werte wieder zurückgesetzt und ein neues, künftiges Servicedatum im Speichermodul der Arbeitsspindel (1) eingetragen werden.

Alternativ kann die Arbeitsspindel auch dauerhaft Daten senden. Hierzu ist eine permanente Onlineverbindung zwischen der Spindelüberwachungseinheit (70) und dem zuständigen ECO-System, in dem sich der Hersteller bewegt, hergestellt. Das ECO-System ist ein Verbund von Unternehmen einer Branche, der durch einen Orchestrator auf eine gemeinsame Wertschöpfung ausgerichtet ist. Die Herstellung der Bindung geschieht i.d.R. über die Steuerung der Maschine, in der die Arbeitsspindel (1) betrieben wird. Leistet die Maschinensteuerung das nicht, wird ein sog. Internet-Gateway an der Spindelüberwachungseinheit (70) angeschlossen und über das firmeninterne Netzwerk in die Cloud oder das ECO-System eingebunden.

Es besteht auch die Möglichkeit, eine Fernwartung der Arbeitsspindel durchzuführen. Hierzu hat die Cloud-Anbindung einen schreibenden Zugriff auf die Spindelüberwachungseinheit (70). Die üblichen Cloud-Apps werden in Diagnose-Apps und Fernwartungs-Apps aufgeteilt. Durch den schreibenden Zugriff wird es möglich, z.B. die arbeitsspindelseitige Spannzange (46) mit entsprechenden Werkzeuglehren im passwortgeschützten Anlernmodus nachzujustieren. Zudem lassen sich bei Arbeitsspindeln (1), die sich durch positive Diagnosedaten auszeichnen, anstehende Wartungsintervalle auf einen späteren Zeitpunkt verschieben.

### Bezugszeichenliste:

- 1: Arbeitsspindel, Werkzeugspindel, Maschinenspindel
- 9: Mittellinie der Arbeitsspindel

- 11: Spindelgehäuse, Hohlprofilgehäuse
- 12: Außenwandung, vierkantförmig
- 13: Innenwandung, zylinderförmig
- 14: Gehäusestege

- 20: Frontflanschbaugruppe
- 21: Hauptflansch
- 22: Schulterlager, vorn; Festlager, Verschleißteil
- 23: Labyrinthflansch
- 24: Temperatursensorausnehmung
- 25: Beschleunigungssensorausnehmung, alternativ

- 27: Schulterlager, Mitte, Verschleißteil
- 28: Schiebehülse

- 30: Motorbaugruppe
- 31: Hohlprofilgehäuse
- 32: Antrieb, Elektromotor, Aktor
- 33: Statorwicklung
- 34: Rotorwicklung
- 35: Spindelwelle
- 36: Aufnahmeausnehmung, kegelstumpfmantelförmig
- 37: Stufenbohrung
- 38: Federspeicherbohrung
- 39: Boden
- 40: Spannstange, Werkzeugspannvorrichtung
- 41: Federkolben
- 42: Federkolbenstange
- 43: Schaltabschnitt, konisch
- 44: Tellerfedern, Federspeicher
- 45: Stützring
- 46: Spannzange, Spannmittel, Verschleißteil
- 47: Spanndorn
- 48: Hakenzungen
- 49: Ringfeder

- 50: Zwischenflanschbaugruppe
- 51: Hohlprofilgehäuse
- 52: Zwischenflansch
- 53: Schulterlager, hinten
- 54: Nockenflansch, Abtastbauteil, Verschleißteil
- 55: Gleithülse

- 57: Sensorenträgerplatte
- 58: Analogsensorträger
- 59: Abstandshalter

- 70: Spindelüberwachungseinheit
- 71: Überwachungsgehäuse
- 72: Steuerungsplatine für Rechen- und Speichermodul
- 73, 74: Anschlussstecker, vielpolig

- 80: Zylinderbaugruppe
- 81: Hohlprofilgehäuse
- 82: Betätigungsvorrichtung, Aktor
- 83: Zylinderzwischenboden
- 85: Zylinderaußenboden
- 87: Stirnventilgehäuse

- 90: Doppelkolben
- 91: Frontkolben, Kolben
- 92: Mittelkolben, Kolben
- 93: Kolbenstange
- 94, 95: Distanzhülsen
- 96: Ventilkolben

- 100: Lüfterbaugruppe
- 101: Lüftergehäuse
- 102: Lüftermotor, Niederspannungsmotor, Aktor
- 103: Axiallüfter
- 104: Lüfterrad

- 121: Wegmesssensor, Analogsensor
- 123: Drehzahlsensor
- 125: Positionssensor
- 126: Temperatursensor
- 129: Beschleunigungssensor, Schwingungssensor

- 140: Werkzeugaufnahme
- 141: Hintergriffsausnehmung

## Patentansprüche

1. Arbeitsspindel (1) mit mindestens einer in einem Spindelgehäuse (11) gelagerten mit einem Antrieb (32) ausgestattete Spindelwelle (35), wobei die Spindelwelle (35) eine - mittels einer im Spindelgehäuse (11) untergebrachten Betätigungsvorrichtung (82) - über mindestens ein Spannmittel (46) öffen- und schließbare Werkzeugspannvorrichtung (40-44) aufweist,
- wobei im Spindelgehäuse (11) mindestens ein Sensor (123) und ein dazugehörendes Abtastbauteil (54) zum Detektieren der Drehzahl der Spindelwelle (35) angeordnet ist,
- wobei im Spindelgehäuse (11) mindestens ein Sensor (121) zur Erfassung der Hubänderung eines Spannmittels (46) angeordnet ist,
- wobei im oder am Spindelgehäuse (11) mindestens ein Sensor (125) zur Erkennung mindestens einer Endlage eines den Betätigungshub der Betätigungsvorrichtung (82) realisierenden Bauteils (90, 92) angeordnet ist,
- wobei im oder am Spindelgehäuse (11) mindestens ein weiterer Sensor (126) angeordnet ist, der physikalische, elektrische und/oder chemische Kenngrößen erfassen kann,
- wobei sich im oder am Spindelgehäuse- (11) eine Spindeluberwachungseinheit (70) befindet, die mindestens ein elektronisches Rechen- und Speichermodul mit Timer - zur Auswertung und dauerhaften Speicherung von Signalen der verbauten Sensoren sowie zur Bereitstellung einer Arbeitsspindelhistorie - aufweist und
- wobei die Spindelüberwachungseinheit (70) mindestens eine elektronische Baugruppe umfasst, die Sensorsignale zur Kommunikation mit einem externen Speichermedium und/oder einer exfernen Steuerung über mindestens eine Datenschnittstelle drahtlos oder drahtgestützt übermitteln kann.

2. Arbeitsspindel (1) gemäß Anspruch 1, **dadurch gekennzeichnet, dass** der Sensor (121) zur Erfassung der Hubänderung eines Spannmittels (46) sowohl die Spannmittelendlagen "offen", "gespannt mit Werkzeug" als auch eine - auf eine Fehleinspannung hinweisende - Zwischenlage des Spannmittels (46) "gespannt ohne Werkzeug" ermitteln kann.

3. Arbeitsspindel (1) gemäß Anspruch 2, **dadurch gekennzeichnet, dass** der vom Sensor (121) ermittelte Hub eines Spannmittels (46) pro Einspannvorgang im Rechen- und Steuermodul als konusgeometrieabhängige Eintauchtiefe der Werkzeugaufnahme (140) in der Aufnahmeausnehmung (36) abgelegt werden kann.

4. Arbeitsspindel (1) gemäß Anspruch 2, **dadurch gekennzeichnet, dass** die Kommunikation mit einem externen Speichermedium und/ oder einer externen Steuerung bidirektional verlaufen kann.

5. Verfahren zur Erfassung und Überwachung der Historie einer Arbeitsspindel (1) gemäß Anspruch 1, in oder an deren Gehäuse (11) mehrere Sensoren (121-129) und mindestens ein Rechen- und Speichermodul mit Timer angeordnet sind, **dadurch gekennzeichnet,**
- **dass** zumindest das Speichermodul während und für die Lebensdauer der Arbeitsspindel (1) folgende Daten verliersicher registriert:
- die Identifikationsdaten der Arbeitsspindel (1), die Revisionsstände der Soft- und Hardware,
- die Parameterdaten der Aktoren (32, 82, 102) und Sensoren (121-129),
- die reinen Prozessdaten und/oder die herausgefilterten Maximal- und Minimalwerte und
- die Diagnosedaten.

6. Verfahren gemäß Anspruch 5, **dadurch gekennzeichnet, dass** zu den Prozessdaten die Leistungsbetriebsstunden, die Anzahl der Spannmittelzyklen der Spannzange (46), die Anzahl der crash- und überlastungsbedingten Drehzahleinbrüche gespeichert werden.

7. Verfahren gemäß Anspruch 5 oder 6, **dadurch gekennzeichnet, dass** zumindest ein Teil der Prozessdaten mit Hilfe einiger Bedientasten in einem Ausgabegerät zumindest temporär anzeigbar sind,wobei die Bedientasten und das Ausgabegerät an der Arbeitsspindel (1) angeordnet sind.

8. Verfahren gemäß der Ansprüche 5 bis 7, **dadurch gekennzeichnet, dass** die Identifikationsdaten, die Revisionsstände der Soft- und Hardware, die Parameterdaten der Aktoren (32, 82, 102) und Sensoren (121-129), die reinen Prozessdaten und/oder die herausgefilterten Maximal- und Minimalwerte und die Diagnosedaten mittels eines Adapters drahtstützt oder drahtlos von autorisierten Wartungs- oder Servicepersonal ausgelesen werden kann.

9. Verfahren gemäß Anspruch 8, **dadurch gekennzeichnet, dass** die im Rechen- und Speichermodul gespeicherten Parameterdaten der Aktoren (32, 82, 102) und Sensoren (121-129), die reinen Prozessdaten und/oder die herausgefilterten Maximal- und Minimalwerte und die Diagnosedaten passwortgeschützt sind.

10. Verfahren gemäß Anspruch 5, **dadurch gekennzeichnet, dass** die Software des Rechen- und Speichermoduls aus den Prozess- und den Diagnosedaten die jeweils entweder zu erwartende störungsfreie Lebensdauer der Arbeitsspindel (1) oder das vorzeitige Ende eines Aktors (32, 82, 102), eines Sensors (121-129) oder eines anderen Verschleißteiles (22, 27, 53, 46) ermittelt, welcher oder was als nächster oder nächstes ausfällt, um diese Information drahtgestützt oder drahtlos an das Wartungspersonal und/oder den Hersteller zu übermitteln.

## Claims

1. A work spindle (1) having at least one spindle shaft (35) which is mounted in a spindle housing (11) and is equipped with a drive (32), the spindle shaft (35) having a tool-clamping device (40-44) which can be opened and closed via at least one clamping means (46) by means of an actuating device (82) accommodated in the spindle housing (11),
- wherein at least one sensor (123) and an associated scanning component (54) are arranged in the spindle housing (11) to detect the rotation speed of the spindle shaft (35),
- wherein at least one sensor (121) for sensing the travel change of a clamping means (46) is arranged in the spindle housing (11),
- wherein at least one sensor (125) for recognising at least one end position of a component (90, 92) realising the actuation travel of the actuating device (82) is arranged in or on the spindle housing (11),
- wherein at least one further sensor (126) which can sense physical, electrical and/or chemical characteristic variables is arranged in or on the spindle housing (11),
- wherein a spindle monitoring unit (70) is situated in or on the spindle housing (11), which spindle monitoring unit has at least one electronic computing and memory module having a timer for evaluating and permanently storing signals of the installed sensors and for providing a work spindle history, and
- wherein the spindle monitoring unit (70) comprises at least one electronic assembly which can transmit sensor signals for communication with an external storage medium and/or an external controller via at least one data interface in a wireless or wired manner.

2. The work spindle (1) according to Claim 1, **characterised in that** the sensor (121) for sensing the travel change of a clamping means (46) can determine the clamping means end positions "open" and "clamped with tool" and also an intermediate position of the clamping means (46) "clamped without tool", which indicates incorrect clamping.

3. The work spindle (1) according to Claim 2, **characterised in that** the travel of a clamping means (46) determined by the sensor (121) can be stored per clamping operation in the computing and control module as a penetration depth, dependent on cone geometry, of the tool holder (140) in the holder recess (36).

4. The work spindle (1) according to Claim 2, **characterised in that** communication with an external storage medium and/or an external controller can take place bidirectionally.

5. A method for sensing and monitoring the history of a work spindle (1) according to Claim 1, in or on the housing (11) of which multiple sensors (121-129) and at least one computing and memory module with a timer are arranged, **characterised in that**
- at least the memory module registers the following data in a manner secured against loss during and for the service life of the work spindle (1):
- the identification data of the work spindle (1), the revision statuses of the software and hardware,
- the parameter data of the actuators (32, 82, 102) and sensors (121-129),
- the raw process data and/or the filtered-out maximum and minimum values, and
- the diagnostic data.

6. The method according to Claim 5, **characterised in that** the performance operating hours, the number of clamping means cycles of the collet (46), and the number of drops in rotation speed caused by crashes and overloads are stored in the process data.

7. The method according to Claim 5 or 6, **characterised in that** at least some of the process data can be displayed at least temporarily in an output device with the aid of some operating keys, wherein the operating keys and the output device are arranged on the work spindle (1).

8. The method according to any of Claims 5 to 7, **characterised in that** the identification data, the revision statuses of the software and hardware, the parameter data of the actuators (32, 82, 102) and sensors (121-129), the raw process data and/or the filtered-out maximum and minimum values, and the diagnostic data can be read by authorised maintenance or servicing personnel in a wired or wireless manner by means of an adapter.

9. The method according to Claim 8, **characterised in that** the parameter data of the actuators (32, 82, 102) and sensors (121-129), the raw process data and/or the filtered-out maximum and minimum values, and the diagnostic data stored in the computing and memory module are password-protected.

10. The method according to Claim 5, **characterised in that** the software of the computing and memory module determines, from the process data and diagnostic data, either the expected fault-free service life of the work spindle (1) or the premature end of an actuator (32, 82, 102), of a sensor (121-129) or of another wear part (22, 27, 53, 46) which will fail next, in order to transmit this information to the maintenance personnel and/or to the manufacturer in a wired or wireless manner.

## Revendications

1. Broche de travail (1), pourvue d'au moins un arbre de broche (35) logé dans un carter de broche (11), équipé d'un entraînement (32), l'arbre de broche (35) comportant un dispositif porte-outil (40 à 44) susceptible de s'ouvrir et de se fermer par l'intermédiaire d'au moins un moyen de serrage (46) au moyen d'un dispositif d'actionnement (82) installé dans le carter de broche (11),
- dans le carter de broche (11) étant placés au moins un capteur (123) et un élément de balayage (54) associé, pour détecter la vitesse de rotation de l'arbre de broche (35),
- dans le carter de broche (11) étant placé au moins un capteur (121), pour enregistrer la variation de course d'un moyen de serrage (46),
- dans ou sur le carter de broche (11) étant placé au moins un capteur (125), pour identifier au moins une position extrême d'un élément (90, 92) réalisant la course d'actionnement du dispositif d'actionnement (82),
- dans ou sur le carter de broche (11) étant placé au moins un capteur (126) supplémentaire, susceptible d'enregistrer les paramètres physiques, électriques et / ou chimiques,
- dans ou sur le carter de broche (11) se trouvant une unité de supervision (70) de la broche, qui comporte au moins un module électronique de calcul et de mémoire avec minuteur pour l'évaluation et la mémorisation durable de signaux des capteurs intégrés, et pour la mise à disposition d'une historique de la broche de travail et
- l'unité de supervision (70) de la broche comprenant au moins un ensemble électronique, susceptible de transmettre sans fil ou avec fil les signaux des capteurs, pour la communication avec un support de mémoire externe et / ou avec un système de commande externe, par l'intermédiaire d'au moins une interface de données.

2. Broche de travail (1) selon la revendication 1, **caractérisée en ce que** pour enregistrer la variation de course d'un moyen de serrage (46), le capteur (121) peut déterminer aussi bien les positions finales « ouvert », « serré avec outil » du moyen de serrage, qu'également une position intermédiaire du moyen de serrage (46) « serré sans outil » faisant état d'un défaut de serrage.

3. Broche de travail (1) selon la revendication 2, **caractérisée en ce que** la course déterminée par le capteur (121) d'un moyen de serrage (46) par opération de serrage peut être sauvegardée dans le module de calcul et de commande, en tant que profondeur de plongée dépendant de la géométrie conique du porte-outil (140) dans l'évidement de logement (36).

4. Broche de travail (1) selon la revendication 2, **caractérisée en ce que** la communication avec un support de mémoire externe et / ou avec un système de commande externe peut circuler de manière bidirectionnelle.

5. Procédé, destiné à enregistrer et à superviser l'historique d'une broche de travail (1) selon la revendication 1, dans ou sur le carter (11) de laquelle sont placés plusieurs capteurs (121 à 129) et au moins un module de calcul et de mémoire, doté d'une minuterie, **caractérisé**
- **en ce qu'**au moins le module de mémoire enregistre pendant et pour la durée de vie de la broche de travail (1) les données suivantes de manière imperdable :
- les données d'identification de la broche de travail (1), les états de révision du logiciel et du matériel,
- les données de paramètres des actionneurs (32, 82, 102) et des capteurs (121 à 129),
- les pures données de processus et / ou les valeurs maximales et minimales filtrées à partir celles-ci
- les données de diagnostic.

6. Procédé selon la revendication 5, **caractérisée en ce qu'**avec les données de processus sont mémorisés les heures de fonctionnement de puissance, le nombre des cycles de serrage de la pince de serrage (46), le nombre des pertes de vitesse de rotation dues à des collisions et des surcharges.

7. Procédé selon la revendication 5 ou 6, **caractérisé en ce qu'**au moins une partie des données de processus peuvent s'afficher au moins temporairement sur un périphérique de sortie, à l'aide de quelques touches de commande, les touches de commande et le périphérique de sortie étant placés sur la broche de travail (1).

8. Procédé selon les revendications 5 à 7, **caractérisé en ce que** les données d'identification, les états de révision du logiciel et du matériel, les données de paramètres des actionneurs (32, 82, 102) et des capteurs (121 à 129), les pures données de processus et /ou les valeurs maximales et minimales filtrées à partir de celles-ci, ainsi que les données de diagnostic peuvent être lues sans fil ou avec fil au moyen d'un adaptateur par un personnel de maintenance ou de service autorisé.

9. Procédé selon la revendication 8, **caractérisé en ce que** les données de paramètres des actionneurs (32, 82, 102) et des capteurs (121 à 129), les pures données de processus et /ou les valeurs maximales et minimales filtrées à partir de celles-ci, ainsi que les données de diagnostic mémorisées dans le module de calcul et de mémoire sont protégées par mot de passe.

10. Procédé selon la revendication 5, **caractérisé en ce que** le logiciel du module de calcul et de mémoire détermine à partir des données de processus et de diagnostic la durée de vie sans panne à attendre respectivement pour la broche de travail (1) ou la fin prématurée d'un actionneur (32, 82, 102), d'un capteur (121 à 129) ou d'une autre pièce d'usure (22, 27, 53, 46) qui sera le prochain ou la prochaine à tomber en panne, pour transmettre cette information avec fil ou sans fil au personnel de service et / ou au fabricant.
